# EUROPEAN PATENT APPLICATION

(11) **EP 4 528 161 A1**
(43) Date of publication of application: **26.03.2025**
(21) Application number: 23198579.7
(22) Date of filing: 20.09.2023
(51) Int. Cl.: F23Q 2/50, C09K 19/00

(54) **FLAME PRODUCING ASSEMBLY COMPRISING A SHAPE-SHIFTING LAYER**

(71) Applicant: BIC Violex Single Member S.A., 145 69 Anoixi (GR)
(72) Inventor: GALANIS, Christos, 145 69 Anoixi (GR)
(74) Representative: Peterreins Schley

(57) **Abstract**

The present disclosure relates to a flame producing assembly (10) comprising a hood (12) configured to shield a flame produced by the flame producing assembly (10) from wind and/or protect a user from heat generated by the flame; and a shape-shifting layer (14) provided on the hood (12). The shape-shifting layer (14) is configured to shape-shift from a first shape to a second shape when heated above a first threshold temperature, wherein the first threshold temperature is at least about 40°C.

## Description

### Technical Field

The present invention relates to the field of flame producing assemblies. More specifically, the present invention relates to flame producing assemblies comprising safety features.

### Background

Flame producing assemblies, such as lighters, are commonly handheld devices. The flame producing assemblies may comprise a hood to shield the flame from the wind or to protect the user from the heat of the flame. When the flame producing assembly is lit for a prolonged time, part of the thermal energy generated by the flame may be absorbed by the hood. The hood may reach temperatures above 60 °C, which may cause discomfort or harm to the user upon touch. Especially, since flame producing assemblies are commonly handheld devices, the user may accidentally touch the hood with his hand. Moreover, the user may place the flame producing assembly into the pockets of the user's clothes which may damage the clothes.

The present disclosure aims to address one or more of the drawbacks in the prior art.

### Summary

In a first aspect, the present disclosure relates to a flame producing assembly comprising a hood configured to shield a flame produced by the flame producing assembly from wind and/or protect a user from heat generated by the flame; and a shape-shifting layer provided on the hood. The shape-shifting layer is configured to shape-shift from a first shape to a second shape when heated above a first threshold temperature, wherein the first threshold temperature is at least about 40°C.

In some embodiments, the shape-shifting layer comprises, essentially consists or consists of a shape-shifting polymer, more specifically a liquid crystal elastomer, even more specifically a nematic liquid crystal elastomer, and in particular a nematic liquid crystal elastomer comprising mesogens.

In some embodiments, the shape-shifting layer is configured to shape-shift from the second shape to the first shape when cooling below a second threshold temperature, wherein the second threshold temperature is equal to or lower than the first threshold temperature.

In some embodiments, the liquid crystal elastomer is in a liquid crystalline phase at a temperature below the second threshold temperature and in a random coil conformation above the first threshold temperature.

In some embodiments, the liquid crystal elastomer in the shape-shifting layer is patterned, more specifically the shape-shifting layer comprises a plurality of domains, wherein the director of the mesogens of the liquid crystal elastomer in a first domain is set at an angle to the director of the mesogens in a second domain.

In some embodiments, the liquid crystal elastomer comprises a plurality of topological defects, in particular a plurality of topological defects with a topological strength of +1.

In some embodiments, the first threshold temperature is between about 45 °C to about 90 °C, more specifically between about 50 °C to about 80 °C and in particular between about 55 °C to about 75 °C.

In some embodiments, the second threshold temperature is at least 5 °C lower than the first threshold temperature.

In some embodiments, at least part of the shape-shifting layer is configured to protrude outward from a surface of the hood when heated above the first threshold temperature.

In some embodiments, the flame producing assembly comprises at least one protrusion adjacent to the shape-shifting layer in the first shape, more specifically the at least one protrusion extends further from the flame producing assembly or the surface of the hood compared to the shape-shifting layer, in particular the at least one protrusion extends further from the flame producing assembly or the surface of the hood when the shape-shifting layer is in its second shape.

In some embodiments, the flame producing assembly comprises a retaining structure, more specifically at least part of the shape-shifting layer is disposed between the retaining structure and the surface of the hood when in the first shape and in the second shape.

In some embodiments, an outer part of the retaining structure forms an outer surface of the flame producing assembly, wherein the outer part comprises at least one opening, in particular, in some embodiments, at least part of the shape-shifting layer is configured to extend out of the at least one opening when in the second shape and not to extend out of the at least one opening when in the first shape.

In some embodiments, a gap is disposed between the outer part of the retaining structure and the surface of the hood, wherein the shape-shifting layer is disposed in the gap, more specifically the width of the gap is at least the thickness of the shape-shifting layer and in particular the width of the gap is greater than the shape-shifting layer.

In some embodiments, the width of the gap is between about 5 µm to about 1000 µm, more specifically between about 25 µm to about 200 µm, and in particular between about 50 µm to about 100 µm.

In some embodiments, the retaining structure comprises at least one vent.

In some embodiments, a first part of the shape-shifting layer is attached to the surface of the hood and a second part of the shape-shifting layer is not attached to the surface of the hood, more specifically the first part of the shape-shifting layer is attached to the surface of the hood by an adhesive, even more specifically an adhesive configured to withstand temperatures of at least 100 °C and in particular by an adhesive selected from the group of cyanoacrylate, epoxy, acrylic, silicone, urethane and mixtures thereof.

In some embodiments, the surface of the hood comprises, consists or essentially consists of a metal.

In some embodiments, the flame is produced by a flame generator, more specifically the flame generator comprises: an ignition mechanism and a fuel outlet connected to a fuel reservoir, in particular gas outlet connected to a gas reservoir, an electrically heated coil, or an electric arc.

In some embodiments, the flame producing assembly comprises an actuating means configured to actuate the flame generator.

### Brief Description of the Figures

**Fig. 1A** shows a schematic drawing of a flame producing assembly comprising a hood and a shape-shifting layer in a first shape provided thereon.
**Fig. 1B** shows a schematic drawing of a flame producing assembly comprising a hood and a shape-shifting layer in a second shape provided thereon.
**Fig. 2A** shows a schematic drawing of a shape-shifting layer in a first shape disposed between a hood and a retaining structure with two adjacent protrusions.
**Fig. 2B** shows a schematic drawing of a shape-shifting layer in a second shape disposed between a hood and a retaining structure with two adjacent protrusions.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

Flame producing assemblies, such as lighters, are commonly designed having a container to store a flammable material that will be ignited to produce a flame. The flammable material is generally a liquefied petroleum gas (LPG), that is filled under pressure in the container of the lighter through a filling valve of the lighter. During release of the LPG from the container through a release device, in particular an exit valve arranged in the lighter, the gas expands and is mixed with the direct surrounding air. The mixture of gas with the oxygen present in the surrounding air is ignited at the exit valve of the lighter to produce a flame. However, parts of the flame producing assemblies, in particular a hood, may absorb thermal energy from the flame, which may heat them to temperatures above 60 °C. If the user touches the hood, these increased temperatures may lead to user discomfort or even tissue damage.

In a first aspect, the present disclosure relates to a flame producing assembly comprising a hood configured to shield a flame produced by the flame producing assembly from the wind and/or protect a user from heat generated by the flame; and a shape-shifting layer provided on the hood. The shape-shifting layer is configured to shape-shift from a first shape to a second shape when heated above a first threshold temperature, wherein the first threshold temperature is at least about 40°C.

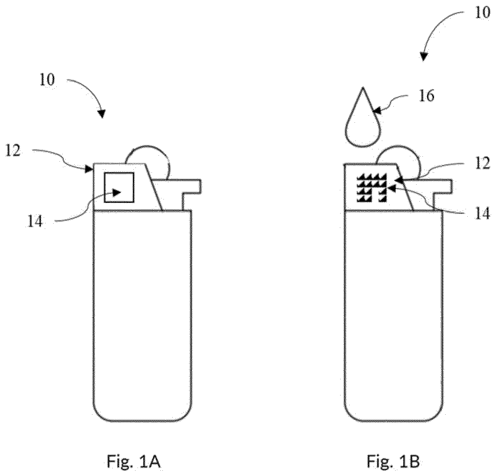

**Fig. 1A** shows a schematic drawing of a flame producing assembly 10 comprising a hood 12 and a shape-shifting layer 14, in the first shape, provided thereon. The shape-shifting layer 14 may be visible and/or touchable by the user, in particular the user may be able to touch/see the shape-shifting layer 14 due to it being provided on the outside of the hood 12, notably on the surface of the hood 12. The shape-shifting layer 14 may be for example flat in the first shape, e.g. the shape-shifting layer 14 may form a flat layer in the first shape. Further, the shape-shifting layer 14 may have a uniform thickness (e.g. the thickness of the thinnest part of the layer and the thickest part of the layer may deviate by less than 30 %, more specifically less than 20%.)

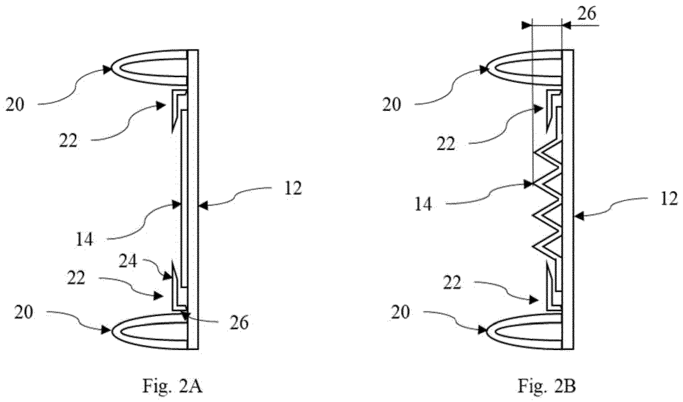

**Fig. 1B** shows a schematic drawing of the flame producing assembly of **Fig. 1A****,** wherein the shape-shifting layer 14 is in the second shape. A flame 16 is schematically illustrated above the hood 12. The shape-shifting layer 14 of **Fig. 1B** is non-flat, e.g. spiky, nubby and/or in the form of pyramidal structures, in the second shape. The user may be able to feel or see the difference in shape between the first and second shape and thus be informed that the hood 12 is above a temperature safe for touching, which may reduce the risk of injury to the user. In some embodiments, the shape-shifting layer 14 may extend up to 10 mm, more specifically up to 8 mm and in particular up to 6 mm away from a surface of the hood 12 in the second shape. In some embodiments, the part of the shape-shifting layer 14 extending furthest from the surface of the hood 12 may extend from the surface of the hood 12 by between about 0.5 mm to 10 mm, more specifically between about 1 mm to about 8 mm and in particular between about 2 mm to 6 mm away from the surface of the hood 12 in the second shape. In some embodiments, the shape-shifting layer 14 may form protrusions, in particular pyramidal structures, in the second shape, wherein the height of the protrusions, in particular the pyramidal structures, (measured from the surface of the hood 12 to the top of the protrusion, in particular the top of the pyramidal structure (in other words the upper point of the pyramid)) is between about 0.5 mm to 10 mm, more specifically between about 1 mm to about 8 mm and in particular between about 2 mm to 6 mm. The length of extension may be measured perpendicular to the surface of the hood 12 from the surface of the hood 12 to the part or point of the shape-shifting layer 14 disposed furthest from the surface of the hood 12. Figure 2B shows the length of extension 26.

In some embodiments, the shape-shifting layer comprises, essentially consists or consists of a shape-shifting polymer, more specifically a liquid crystal elastomer, even more specifically a nematic liquid crystal elastomer, and in particular a nematic liquid crystal elastomer comprising mesogens.

The term "shape-shifting layer" is well-known and attributed i.a. (inter alia) its common meaning in the art. Additionally or alternatively, the term "shape-shifting layer" within this disclosure relates to a layer of one or more materials configured to switch between at least two shapes when induced by an external stimulus. Herein the external stimulus is an increase of the shape-shifting layer's temperature to or above 40 °C. The term "liquid crystal elastomer" is well-known and attributed i.a. its common meaning in the art. Additionally or alternatively, the term "liquid crystal elastomer" may refer to a crosslinked liquid crystalline polymer network. Additionally or alternatively, the term "liquid crystal elastomer" may refer to a polymer, in particular a cross-linked polymer, configured to change shape upon transitioning from a liquid crystalline phase to an isotropic (orientationally disordered) phase.

In some embodiments, the liquid crystal elastomer is (or is configured to be) in a liquid crystalline phase at a temperature below the second threshold temperature and in a random coil conformation above first threshold temperature. The liquid crystal elastomer may therefore be a thermotropic liquid crystal. Liquid crystalline molecules, e.g. the molecules making up liquid crystal elastomers, typically comprise a plurality of "rigid moieties" and "flexible moieties". The rigid part may align the molecules in a certain orientation or direction, while the flexible moieties allow for the fluidity of the liquid crystal. The rigid moieties may be referred to as mesogens. A liquid crystal elastomer may for example be manufactured by cross-linking 4-methoxybenzoic acid 4-(6-acryloyloxyhexyloxy) phenyl ester (ST3866, LC monomer) (as mesogens/rigid moiety) with 1,4-Bis[4-(3-acryloyloxypropyloxy)benzoyloxy]-2-methylbenzene (ST3021, crosslinker) (as crosslinker/flexible moiety). Other mesogens include for example p-azoxyanisole, 4'-n-octyl-p-cyanobiphenyl, [3-methyl-4-[4-(6-prop-2-enoyloxyhexoxy)benzoyl]oxyphenyl] 4-(6-prop-2-enoyloxyhexoxy)benzoate, also known as RM82, 2-Methyl-1,4-phenylene bis(4-(3-(acryloyloxy)propoxy)benzoate), also known as or RM257. Thiol-based spacers such as 2,2'-(ethylenedioxy)diethanethiol may also be used in the synthesis. An alternative cross-linker/flexible moiety is for example pentaerythritol tetrakis(3-mercaptopropionate).

Liquid crystal elastomers, in particular nematic liquid crystal elastomers, can be defined by "directors". The term "director" is well-known and attributed i.a. its common meaning the art. Alternatively or additionally, the term "director" relates to the average direction of the long molecular axes of the molecules in the liquid crystal elastomer. Alternatively or additionally, the term "director" refers to the average orientation of the mesogens in the liquid crystal elastomer. A liquid crystal elastomer may undergo contraction parallel to its director and expansion in the plane perpendicular to its director, when transitioning from its liquid crystalline phase to its isotropic phase.

In some embodiments, the liquid crystal elastomer in the shape-shifting layer is patterned, in other words the shape-shifting layer comprises a plurality of domains, wherein at least a first domain and a second domain of the plurality of domains have a different director. In some embodiments, the liquid crystal elastomer in the shape-shifting layer is patterned, more specifically the shape-shifting layer comprises a plurality of domains, wherein the director of the mesogens of the liquid crystal elastomer in a first domain is set at an angle to the director of the mesogens in a second domain. When the liquid crystal elastomer transitions from its liquid crystalline phase to its isotropic phase, the different directors may result in the direction of expansion and contraction differing between the first domain and the second domain, which in turn may result in the shape-shifting layer becoming non-flat, or uneven. The same may apply to a shape-shifting layer comprising a first domain comprising mesogens set at different angle compared to a second domain. By adjusting the director or the orientation of the mesogens in the individual domains, the second shape may be determined. The term "domain" as used herein, may also refer to "voxels" of the liquid crystal elastomer. The term "voxel" is well-known and i.a. attributed its common meaning in the art. Additionally or alternatively, the term "voxel" relates to a discrete volume of the liquid crystal elastomer. The term "voxel" may be understood as a "volumetric pixel". Accordingly, the liquid crystal elastomer may comprise or consist of a plurality of voxels, wherein at least two voxels of the plurality of voxels have differing directors.

In some embodiments, the liquid crystal elastomer comprises a plurality of topological defects, in particular a plurality of topological defects with a topological strength of +1. In some embodiments, the liquid crystal elastomer comprises a plurality of topological defects, in particular a plurality of topological defects with a topological strength of -1. The term "topological defect" is well-known an i.a. attributed its common meaning in the art. Additionally or alternatively, the term "topological defect" may refer to a point around which the director varies azimuthally by 360°. It should be noted that a topological defect with a topological strength of + 1 and a topological defect with a topological strength of -1 may cancel one another out. Accordingly, it may be important to pattern the liquid crystal elastomer, such that the plurality of topological defects does not cancel one another out., e.g. only topological with a topological strength of -1 or +1 throughout the shape-shifting layer.

In some embodiments, the liquid crystal elastomer in the shape-shifting layer is patterned, wherein the shape-shifting layer comprises plurality of domains, wherein at least a first domain and second domain of the plurality of domains both have a topological defect with a topological strength of+1 or -1.

In some embodiments, the shape-shifting layer is configured to shape-shift from the second shape to the first shape when cooling below a second threshold temperature, wherein the second threshold temperature is equal to or lower than the first threshold temperature.

The shape-shifting layer may be subject to hysteresis. As a result, when the shape-shifting layer is heated it may not exhibit the change of physical properties exactly at the first threshold temperature but at a temperature around it. In particular, the hysteresis width ΔH, i.e. the difference between two transition temperatures at which the shape-shift occurs, can range from 1 to 10°C, for example a hysteresis width of±5 °C. When the shape-shifting layer is heated, the hysteresis will usually lead to the temperature at which the change of physical properties occurs to be shifted to a higher temperature. The shift of temperature may depend, among other factors, upon the heating rate. A greater heating rate will commonly lead to a greater shift of temperature. When cooling the shape-shifting layer, the hysteresis will commonly shift the temperature at which the change occurs to a lower temperature. Analogously, a greater cooling rate may lead to a greater shift of temperature. As a result, the shape-shifting layer may have a first threshold temperature and a second threshold temperature, wherein the difference between the two threshold temperatures is caused by hysteresis. As explained above, the temperature difference, and thereby the first and second threshold temperatures, may change depending on other factors, e.g. the rate of heating and cooling. The properties of the shape-shifting layer at temperatures between the first threshold temperature and the second threshold temperature may not be clearly definable. At temperatures between the first threshold temperature and the second threshold temperature, the shape-shifting layer may be in a shape between the first shape and the second shape. In some embodiments, the second threshold temperature is at least 5 °C lower than the first threshold temperature.

In some embodiments, the first threshold temperature is between about 45 °C to about 90 °C, more specifically between about 50 °C to about 80 °C and in particular between about 55 °C to about 75 °C. As mentioned above, the temperature at which tissue damage may start to occur is about 60 °C, therefore it may be advisable to set the first threshold at a temperature around 60 °C.

In some embodiments, at least part of the shape-shifting layer is configured to protrude outward from the surface of the hood when heated above the first threshold temperature.

In some embodiments, the flame producing assembly comprises at least one protrusion disposed on the hood, in particular adj acent to the shape-shifting layer in the first shape, more specifically the at least one protrusion extends further from the flame producing assembly or the surface of the hood compared to the shape-shifting layer (measured in a direction perpendicular to the surface of the hood), in particular the at least one protrusion extends further from the flame producing assembly or the surface of the hood when the shape-shifting layer is in its second shape. That the at least one protrusion extends further compared to the shape shifting layer from the flame producing assembly or the surface of the hood, relates to the part of the protrusion being disposed furthest from the flame producing assembly or the surface of the hood being disposed further away therefrom compared to the part of the shape-shifting layer disposed furthest from the flame producing assembly or the surface of the hood. The at least one protrusion may protect the shape-shifting layer from accidental contact to hazardous objects which may damage the shape-shifting layer. In particular, in some embodiments, the flame producing assembly comprises at least two protrusions, more specifically two protrusions, and in particular the shape-shifting layer is disposed between the at least two protrusions.

In some embodiments, the flame producing assembly comprises a retaining structure, notably on top of at least part of the shape-shifting layer. More specifically, at least part of the shape-shifting layer is disposed between the retaining structure and the surface of the hood when the shape-shifting layer is in the first shape and when the shape-shifting layer is in the second shape. In other words, the retaining structure may cover at least part of the shape-shifting layer when the shape-shifting layer is in the first shape and when the shape-shifting layer is in the second shape. The retaining structure may prevent the shape-shifting layer from detaching from the surface of the hood. Further, the retaining structure may allow the shape-shifting layer to shape-shift from the first shape to the second shape completely, as opposed to a shape-shifting layer that is partly attached to the surface of the hood, e.g. by an adhesive.

In some embodiments, an outer part of the retaining structure forms an outer surface of the flame producing assembly, wherein the outer part comprises at least one opening. In particular, in some embodiments, at least part of the shape-shifting layer is configured to extend out of the at least one opening (in a direction perpendicular to the surface of the hood) when in the second shape and not to extend out of the at least one opening (in a direction perpendicular to the surface of the hood) when in the first shape. The at least one opening may allow the user to see and/or feel the shape-shifting layer. The outer part of the retaining structure may be the part of the retaining structure disposed the furthest from the surface of the hood. In other words, the outer part may be the part of the retaining structure which is disposed furthest away from the surface of the hood when measuring a distance perpendicular to the surface of the hood.

In some embodiments, a gap is disposed between the outer part of the retaining structure and the surface of the hood, wherein the shape-shifting layer is disposed in the gap, more specifically the width of the gap is at least the thickness of the shape-shifting layer and in particular the width of the gap is greater than the thickness of the shape-shifting layer. The width of the gap may be greater than the thickness of the shape-shifting layer in the first shape and in the second shape, such that the shape-shifting layer can move/deform (freely) when shape-shifting.

In some embodiments, the width of the gap is between about 5 µm to about 1000 µm, more specifically between about 25 µm to about 200 µm, and in particular between about 50 µm to about 100 µm. In some embodiments, the thickness of the shape-shifting layer in the first shape is between about 5 µm to about 1000 µm, more specifically between about 25 µm to about 200 µm, and in particular between about 50 µm to about 100 µm.

**Fig. 2A** shows a schematic drawing of a shape-shifting layer 14 in a first shape disposed between a surface of a hood 12 and a retaining structure 22 with two protrusions 20, each of the protrusions 20 being adjacent to the retaining structure 22. **Fig. 2B** shows the shape-shifting layer 14 in a second shape. As shown in **Fig. 2A** and **Fig. 2B** the two protrusions 20 extend further from the surface of the hood 12 than the shape-shifting layer 14, when the shape-shifting layer 14 is in its first shape and when the shape-shifting layer 14 is in its second shape. Accordingly, the two protrusions 20 may protect the shape-shifting layer 14, e.g. from objects in the user's pocket in case the user places the flame producing assembly in his/her pocket after use.

As shown in **Fig. 2A****,** the retaining structure comprises an outer part 24 and a wall part 26 connecting the outer part 24 to the surface of the hood 12, in particular the outer part 24 is perpendicular to the wall part 26. In some embodiments, the wall part 26 of the retaining structure is disposed between the at least one protrusion 20 and the shape-shifting layer 14. The outer part 24 thereby forms an outer surface of the flame producing assembly 10. **Fig. 2A** and **Fig. 2B** show at least part of the shape-shifting layer 14 being disposed between the retaining structure 22 and the surface of the hood 12 when in the first shape and the second shape, more specifically within a gap formed between the surface of the hood 12 and the outer part 24 of the retaining structure 22. Additionally, **Fig. 2A** shows the shape-shifting layer 14 not extending beyond the retaining structure 22 in the first shape, whereas **Fig. 2B** shows part of the shape-shifting layer 14 in the second shape extending beyond the retaining structure 22 through an opening formed by the retaining structure 22.

In some embodiments, the outer part 24 may be fitted to the second shape of the shape-shifting layer 14. In other words, the outer part 24 may be fitted to the second shape of the shape-shifting layer 14 such that the protrusions of the shape-shifting layer 14 in the second shape can extend outwards, while the shape-shifting layer 14 as a whole is secured to the surface of the hood 12. In some embodiments, the outer part 24 has a lattice structure, more specifically the outer part 24 has a lattice structure wherein the openings of the lattice structure allow the protrusions of the shape-shifting layer 14 to extend outwards. The openings of the lattice structure would hence form the opening(s) formed by the retaining structure 22 referred to above. The lattice structure may allow for example only the spikes or pyramidal structures to protrude out of the retaining structure 22, while securing the rest of the shape-shifting layer 14 to the surface of the hood 12.

In some embodiments, the retaining structure comprises at least one vent. The vent may improve the air circulation around the shape-shifting layer, which in turn may increase the rate of cooling of the shape-shifting layer, such that it does not remain in the second shape for an excessive amount of time, in particular as the heat conductivity (and thereby the rate of cooling) of the shape-shifting layer may be significantly lower than that of the hood.

In some embodiments, a first part of the shape-shifting layer is attached to the surface of the hood and a second part of the shape-shifting layer is not attached to the surface of the hood. The first part of the shape-shifting layer may therefore secure the shape-shifting layer to the flame producing assembly, while the second part of the shape-shifting layer is able to shape-shift. For example, the first part of the shape-shifting layer may be a central part of the shape-shifting layer and the second part of the shape-shifting layer may be the part of the shape-shifting layer surrounding the first part. Alternatively, the first part of the shape-shifting layer may be one edge of the shape-shifting layer, e.g. one edge of the four edges of a rectangular shape-shifting layer, and the second part may be the rest of the rectangular shape-shifting layer.

In some embodiments, the first part of the shape-shifting layer is attached to the surface of the hood by an adhesive, even more specifically an adhesive configured to withstand temperatures of at least 100 °C and in particular by an adhesive selected from the group of cyanoacrylate, epoxy, acrylic, silicone, urethane and mixtures thereof.

In some embodiments, the hood comprises, consists or essentially consists of a metal. In some embodiments, such metal can be chosen from copper, platinum, gold, iron and/or steel. The aforementioned metals may be beneficial as they may have a high thermal conductivity. A high thermal conductivity may be beneficial to quickly transfer to the shape-shifting layer.

In some embodiments, the hood may be in thermal contact with the shape-shifting layer, in particular the hood may be in thermal contact with the shape-shifting layer in the first shape. It may be advantageous that the hood is in thermal contact with the shape-shifting layer such that the temperature of the shape-shifting layer is more closely correlated to the temperature of the hood.

In some embodiments, the flame is produced by a flame generator, more specifically the flame generator comprises: an ignition mechanism and a fuel outlet connected to a fuel reservoir, in particular gas outlet connected to a gas reservoir, an electrically heated coil, or an electric arc.

In some embodiments, the flame producing assembly comprises an actuating means configured to actuate the flame generator.

In some embodiments, the flame producing assembly may be a handheld device.

The shape-shifting layer may be manufactured as described for example in Taylor H. Ware et al. 2015, "Voxelated liquid crystal elastomers", Science 347, 982, DOI: 10.1126/science.1261019, which is incorporated herein by reference in its entirety. In particular, the manufacturing process is described on p. 982 to 983.

Although the present invention is defined in the attached claims, it should be understood that the present invention can also (alternatively) be defined in accordance with the following embodiments:
1. A flame producing assembly (10) comprising:
   a hood (12) configured to shield a flame (16) produced by the flame producing assembly (10) from wind and/or protect a user from heat generated by the flame; and
   a shape-shifting layer (14) provided on the hood (12), wherein the shape-shifting layer (14) is configured to shape-shift from a first shape to a second shape when heated above a first threshold temperature, wherein the first threshold temperature is at least about 40°C.
2. The flame producing assembly (10) according to any preceding embodiment, wherein the shape-shifting layer (14) comprises, essentially consists or consists of a shape-shifting polymer, more specifically a liquid crystal elastomer, even more specifically a nematic liquid crystal elastomer, and in particular a nematic liquid crystal elastomer comprising mesogens.
3. The flame producing assembly (10) according to any preceding embodiment, wherein the shape-shifting layer (14) is configured to shape-shift from the second shape to the first shape when cooling below a second threshold temperature, wherein the second threshold temperature is equal to or lower than the first threshold temperature.
4. The flame producing assembly (10) according to embodiment 2 or 3, wherein the liquid crystal elastomer is in a liquid crystalline phase at a temperature below the second threshold temperature and in a random coil conformation above the first threshold temperature.
5. The flame producing assembly (10) according to any one of embodiments 2 to 4, wherein the liquid crystal elastomer in the shape-shifting layer (14) is patterned, more specifically wherein the shape-shifting layer (14) comprises a plurality of domains, wherein the director of the mesogens of the liquid crystal elastomer in a first domain is set at an angle to the director of the mesogens in a second domain.
6. The flame producing assembly (10) according to any one of embodiments 2 to 5, wherein the liquid crystal elastomer comprises a plurality of topological defects, in particular a plurality of topological defects with a topological strength of+1.
7. The flame producing assembly (10) according to any preceding embodiment, wherein the first threshold temperature is between about 45 °C to about 90 °C, more specifically between about 50 °C to about 80 °C and in particular between about 55 °C to about 75 °C.
8. The flame producing assembly (10) according to any one of embodiments 3 to 7, wherein the second threshold temperature is at least 5 °C lower than the first threshold temperature.
9. The flame producing assembly (10) according to any preceding embodiment, wherein at least part of the shape-shifting layer (14) is configured to protrude outward from a surface of the hood (12) when heated above the first threshold temperature.
10. The flame producing assembly (10) according to any preceding embodiment, wherein the flame producing assembly (10) comprises at least one protrusion (20) adjacent to the shape-shifting layer (14) in the first shape, more specifically wherein the at least one protrusion (20) extends further from the flame producing assembly (10) or the surface of the hood (12) compared to the shape-shifting layer (14), in particular wherein the at least one protrusion (20) extends further from the flame producing assembly (10) or the surface of the hood (12) when the shape-shifting layer (14) is in its second shape.
11. The flame producing assembly (10) according to any preceding embodiment, wherein the flame producing assembly (10) comprises a retaining structure (22), more specifically wherein at least part of the shape-shifting layer (14) is disposed between the retaining structure (22) and the surface of the hood (12) when in the first shape and in the second shape.
12. The flame producing assembly (10) according to embodiment 11, wherein an outer part (24) of the retaining structure (22) forms an outer surface of the flame producing assembly (10), wherein the outer part (24) comprises at least one opening,
   in particular wherein at least part of the shape-shifting layer (14) is configured to extend out of the at least one opening when in the second shape and not to extend out of the at least one opening when in the first shape.
13. The flame producing assembly (10) according to embodiment 11 or 12, wherein a gap is disposed between the outer part (24) of the retaining structure (22) and the surface of the hood (12), wherein the shape-shifting layer (14) is disposed in the gap, more specifically wherein the width of the gap is at least the thickness of the shape-shifting layer (14) and in particular wherein the width of the gap is greater than the thickness of the shape-shifting layer (14).
14. The flame producing assembly (10) according to embodiment 13, wherein the width of the gap is between about 5 µm to about 1000 µm, more specifically between about 25 µm to about 200 µm, and in particular between about 50 µm to about 100 µm.
15. The flame producing assembly (10) according to any one of embodiments 11 to 14, wherein the retaining structure (22) comprises at least one vent.
16. The flame producing assembly (10) according to any preceding embodiment, wherein a first part of the shape-shifting layer (14) is attached to the surface of the hood (12) and a second part of the shape-shifting layer (14) is not attached to the surface of the hood (12), more specifically wherein the first part of the shape-shifting layer (14) is attached to the surface of the hood (12) by an adhesive, even more specifically an adhesive configured to withstand temperatures of at least 100 °C and in particular by an adhesive selected from the group of cyanoacrylate, epoxy, acrylic, silicone, urethane and mixtures thereof.
17. The flame producing assembly (10) according to any preceding embodiment, wherein the hood (12) comprises, consists or essentially consists of a metal.
18. The flame producing assembly (10) according to any preceding embodiment, wherein the flame (16) is produced by a flame generator, more specifically wherein the flame generator comprises: an ignition mechanism and a fuel outlet connected to a fuel reservoir, in particular gas outlet connected to a gas reservoir,
   an electrically heated coil, or
   an electric arc.
19. The flame producing assembly (10) according to any preceding embodiment, wherein the flame producing assembly (10) comprises an actuating means configured to actuate the flame generator.

## Claims

1. A flame producing assembly (10) comprising:
a hood (12) configured to shield a flame (16) produced by the flame producing assembly (10) from wind and/or protect a user from heat generated by the flame; and
a shape-shifting layer (14) provided on the hood (12), wherein the shape-shifting layer (14) is configured to shape-shift from a first shape to a second shape when heated above a first threshold temperature, wherein the first threshold temperature is at least about 40°C.

2. The flame producing assembly (10) according to claim 1, wherein the shape-shifting layer (14) comprises, essentially consists or consists of a shape-shifting polymer, more specifically a liquid crystal elastomer, even more specifically a nematic liquid crystal elastomer, and in particular a nematic liquid crystal elastomer comprising mesogens.

3. The flame producing assembly (10) according to any preceding claim, wherein the shape-shifting layer (14) is configured to shape-shift from the second shape to the first shape when cooling below a second threshold temperature, wherein the second threshold temperature is equal to or lower than the first threshold temperature.

4. The flame producing assembly (10) according to claim 2 or 3, wherein the liquid crystal elastomer is in a liquid crystalline phase at a temperature below the second threshold temperature and in a random coil conformation above the first threshold temperature.

5. The flame producing assembly (10) according to any one of claims 2 to 4, wherein the liquid crystal elastomer in the shape-shifting layer (14) is patterned, more specifically wherein the shape-shifting layer (14) comprises a plurality of domains, wherein the director of the mesogens of the liquid crystal elastomer in a first domain is set at an angle to the director of the mesogens in a second domain.

6. The flame producing assembly (10) according to any one of claims 2 to 5, wherein the liquid crystal elastomer comprises a plurality of topological defects, in particular a plurality of topological defects with a topological strength of+1.

7. The flame producing assembly (10) according to any preceding claim, wherein the first threshold temperature is between about 45 °C to about 90 °C, more specifically between about 50 °C to about 80 °C and in particular between about 55 °C to about 75 °C.

8. The flame producing assembly (10) according to any preceding claim, wherein at least part of the shape-shifting layer (14) is configured to protrude outward from a surface of the hood (12) when heated above the first threshold temperature.

9. The flame producing assembly (10) according to any preceding claim, wherein the flame producing assembly (10) comprises at least one protrusion (20) adjacent to the shape-shifting layer (14) in the first shape, more specifically wherein the at least one protrusion (20) extends further from the flame producing assembly (10) or the surface of the hood (12) compared to the shape-shifting layer (14), in particular wherein the at least one protrusion (20) extends further from the flame producing assembly (10) or the surface of the hood (12) when the shape-shifting layer (14) is in its second shape.

10. The flame producing assembly (10) according to any preceding claim, wherein the flame producing assembly (10) comprises a retaining structure (22), more specifically wherein at least part of the shape-shifting layer (14) is disposed between the retaining structure (22) and the surface of the hood (12) when in the first shape and in the second shape.

11. The flame producing assembly (10) according to claim 10, wherein an outer part (24) of the retaining structure (22) forms an outer surface of the flame producing assembly (10), wherein the outer part (24) comprises at least one opening,
in particular wherein at least part of the shape-shifting layer (14) is configured to extend out of the at least one opening when in the second shape and not to extend out of the at least one opening when in the first shape.

12. The flame producing assembly (10) according to claim 10 or 11, wherein a gap is disposed between the outer part (24) of the retaining structure (22) and the surface of the hood (12), wherein the shape-shifting layer (14) is disposed in the gap, more specifically wherein the width of the gap is at least the thickness of the shape-shifting layer (14) and in particular wherein the width of the gap is greater than the thickness of the shape-shifting layer (14).

13. The flame producing assembly (10) according to claim 12, wherein the width of the gap is between about 5 µm to about 1000 µm, more specifically between about 25 µm to about 200 µm, and in particular between about 50 µm to about 100 µm.

14. The flame producing assembly (10) according to any one of claims 10 to 13, wherein the retaining structure (22) comprises at least one vent.

15. The flame producing assembly (10) according to any preceding claim, wherein a first part of the shape-shifting layer (14) is attached to the surface of the hood (12) and a second part of the shape-shifting layer (14) is not attached to the surface of the hood (12), more specifically wherein the first part of the shape-shifting layer (14) is attached to the surface of the hood (12) by an adhesive, even more specifically an adhesive configured to withstand temperatures of at least 100 °C and in particular by an adhesive selected from the group of cyanoacrylate, epoxy, acrylic, silicone, urethane and mixtures thereof.
